# EUROPÄISCHE PATENTSCHRIFT

(11) **EP 4 374 084 B1**
(45) Veröffentlichungstag und Bekanntmachung des Hinweises auf die Patenterteilung: **17.12.2025**
(21) Anmeldenummer: 22733990.0
(22) Anmeldetag: 21.06.2022
(51) Int. Cl.: F16D 55/00, F16D 55/224, F16D 55/2265, F16D 55/227, F16F 1/38

(54) **BREMSSATTEL FÜR EINE FAHRZEUGBREMSE**
BRAKE CALIPER FOR A VEHICLE BRAKE
ÉTRIER DE FREIN POUR UN FREIN DE VÉHICULE

(30) Priorität: 21.07.2021 DE 102021118890
(43) Veröffentlichungstag der Anmeldung: 29.05.2024
(73) Patentinhaber: ZF CV Systems Europe BV, 1170 Brüssel (BE)
(72) Erfinder: HECKER, Jannis, 69121 Heidelberg (DE); SCHERER, Vitalij, 69181 Leimen (DE)
(74) Vertreter: Schäferjohann, Volker
(86) Internationale Anmeldenummer: PCT/EP2022/066861
(87) Internationale Veröffentlichungsnummer: WO 2023/001467

(56) Entgegenhaltungen:
- EP-A1- 2 217 825
- EP-B1- 2 217 825
- WO-A1-2005/124179
- DE-A1- 102007 001 213
- DE-A1- 102014 115 765
- GB-A- 2 156 924

## Beschreibung

Die Erfindung betrifft einen Bremssattel für eine Fahrzeugbremse, insbesondere eine Nutzfahrzeug-Scheibenbremse, aufweisend eine Bolzenführung zum axialen Verschieben des Bremssattels auf einem Bremsträger, und einen axial verschieblich in der Bolzenführung aufgenommenen Bolzen, wobei der Bolzen eine um den Bolzen angeordnete Buchse aufweist.

Innerhalb der Bolzenführung der Fahrzeugbremse werden Geräusche erzeugt, insbesondere Klappergeräusche. Diese sind oftmals störend. Insbesondere bei Fahrzeugbremsen in Busfahrzeugen, bei welchen die Bremsen oftmals direkt unterhalb des Fahrersitzes oder der Sitze von Fahrzeuggästen verbaut sind. Die Geräusche sind das Resultat eines großen Radialspiels auf der Spielbolzenseite der Fahrzeugbremse. Dieses Radialspiel ist bedingt durch den Ausgleich von Teiletoleranzen.

Die EP2217825 A1 offenbart eine Bremsscheibenbolzenführung mit einem Dämpfungselement, wobei das Dämpfungselement am Außenumfang eines Führungsholm integriert ist. Der Führungsholm weist an seinem Außenumfang Ausnehmungen auf, in dem das Dämpfungselement angeordnet ist. Zusätzlich ist das Dämpfungselement ein aus Nuten und Stege gebildeter Holkörper, der in der Herstellung aufwändig ist.

Die WO2005/124179A1 und die GB2156924 A offenbaren weitere Alternativen von Dämpfungselementen in der Bolzenführung von Scheibenbremsen.

Der Erfindung liegt die Aufgabe zu Grunde, zumindest einen der oben genannten Nachteile zu adressieren, insbesondere soll ein Bremssattel bereitgestellt werden, bei dem die Geräuschemission im Gebrauch vermindert ist

Die Aufgabe wird durch einen Bremssattel gelöst, der die Merkmale von Anspruch 1 aufweist. In den abhängigen Ansprüchen werden vorteilhafte Ausgestaltungen der Erfindung angegeben.

Erfindungsgemäß umfasst der Bremssattel zusätzlich zu der Buchse und an diese angrenzend zumindest ein Dämpfungselement**,** wobei das Dämpfungselement den Bolzen umfänglich umgibt und dazu eingerichtet ist, eine Relativbewegung in radialer Richtung zwischen dem Bolzen und der Bolzenführung zu dämpfen. Das Dämpfungselement ist dazu eingerichtet, das radiale Spiel einzugrenzen oder das Gesamtspiel der Bauteile, welches verursacht wird durch die einzelnen Teiletoleranzen. Hiermit wird eine einfache und kostengünstige Lösung für das Problem vorgeschlagen. Das Dämpfungselement kann in den bekannten Bremssattel integriert werden, ohne diesen wesentlich zu verändern.

Erfindungsgemäß ist das Dämpfungselement benachbart zu der Buchse angeordnet, insbesondere ist das Dämpfungselement zumindest abschnittweise in Anlage zu der Buchse angeordnet. Das Dämpfungselement kann die Buchse berühren, oder abschnittsweise berühren oder beabstandet zu der Buchse angeordnet sein.

Bevorzugt weist der Bremssattel ein Dichtungselement auf, wobei das Dämpfungselement ein Teil des Dichtungselements ist. Das Dichtungselement ist an einem äußeren Ende des Bolzens angeordnet und umschließt diesen dichtend. Es schützt die Bolzenführung vor äußeren Einflüssen, insbesondere gegen Schmutz und Nässe. Das Dichtungselement ist aus einem elastomeren Material hergestellt. Das Dämpfungselement ist integral als eine axiale Verlängerung des Dichtungselements an diesem angeordnet. Vorzugsweise ist ein hohlzylindrisches Dämpfungselement integral an dem Dichtungselement angeschlossen. Hierdurch wird auf einfache Weise ein zusätzliches Element in den Bremssattel integriert ohne den Montageaufwand maßgeblich zu erhöhen.

Bevorzugt ist eine Innenkontur des Dämpfungselementes, insbesondere im nicht montierten Zustand, im Querschnitt oval-förmig, insbesondere kreisförmig oder elliptisch, wobei insbesondere das Dämpfungselement zumindest abschnittsweise eine hohlzylindrische Form aufweist. Wenn das Dämpfungselement eine hohlzylindrische Form aufweist, ist der Querschnitt der Innenkontur des Dämpfungselementes kreisförmig. Das Dämpfungselement ist im montierten Zustand koaxial zu dem Bolzen angeordnet. Insbesondere die elliptische Form ist dazu eingerichtet, das Radialspiel zwischen dem Bolzen und der Bolzenführung zu überbrücken. Vorzugsweise weist die Außenkontur des Dämpfungselementes die gleiche Form auf wie die Innenkontur des Dämpfungselementes, sodass die Dicke des Dämpfungselementes konstant ist. **In** einer weiteren Ausführungsform kann die Innenkontur elliptisch sein und die Außenkontur kreisförmig oder umgekehrt.

Bevorzugt ist der Innendurchmesser des Dämpfungselements kleiner als der Innendurchmesser der Buchse. Das Dämpfungselement weist eine ringförmige Querschnittsfläche auf, wobei die innere Ausnehmung des Rings dazu eingerichtet ist, den Bolzen aufzunehmen. Der Innendurchmesser wird an einer Querschnittsfläche der Ausnehmung gemessen. Bei nicht-kreisförmigen Querschnittsflächen wird der Innendurchmesser an der kleinsten Diagonalen der Querschnittsfläche gemessen. Bei nicht-konstanter Querschnittsfläche über die Länge des Dämpfungselementes oder der Buchse ist jeweils der kleinste Durchmesser für den Vergleich heranzuziehen.

Bevorzugt ist das Dämpfungselement teilweise oder vollständig aus einem Elastomer ausgebildet, insbesondere ist die Buchse teilweise oder vollständig aus einem Metall ausgebildet. Die Buchse soll möglichst verschließresistent und stabil sein. Aus diesem Grund ist es vorteilhaft, zusätzlich zu der herkömmlich verwendeten Buchse ein weiteres Element, also ein Dämpfungselement, zu integrieren, welches ein anderes Material als die Buchse aufweist. Elastomere sind in der Lage große Verformungen reversibel aufzunehmen. Demnach sind sie dazu eingerichtet, Toleranzen zu überbrücken und Schwingungen zu dämpfen.

Bevorzugt weist das Dämpfungselement ein Verstärkungselement auf, wobei insbesondere das Verstärkungselement teilweise oder vollständig aus einem Metall ausgebildet ist. Hierdurch wird die Stabilität des Dämpfungselementes erhöht. Dies kann vorteilhaft bei der Montage des Dämpfungselementes auf den Bolzen sein. Insbesondere weist das Material des Verstärkungselementes eine höhere Steifigkeit als das Elastomer-Material des Dämpfungselementes auf. Beispielsweise kann anstelle eines Metalls auch ein Kunststoff, z.B. ein Duroplast, oder ein Verbundwerkstoff eingesetzt werden. Das Verstärkungselement kann die Form von Stäbchen aufweisen oder als Ring oder Plättchen ausgebildet sein. Wenn der Bremssattel mehrere Dämpfungselemente aufweist, können alle Dämpfungselemente ein Verstärkungselement aufweisen oder ein Teil der Dämpfungselemente oder keines der Dämpfungselemente.

Bevorzugt ist das Verstärkungselement vollständig ummantelt in dem Dämpfungselement angeordnet. Hierdurch werden Beschädigungen in der Bolzenführung, während der Montage oder während der Benutzung innerhalb der Führung, weitestgehend vermieden.

Bevorzugt ist das Dämpfungselement ein erstes Dämpfungselement und der Bremssattel weist zusätzlich ein zweites Dämpfungselement auf, wobei die Dämpfungselemente relativ zu der Buchse auf einander gegenüberliegenden Seiten zu der Buchse angeordnet sind, vorzugsweise an die Buchse angrenzend. Bei der Verwendung eines zweiten Dämpfungselementes kann die Dämpfungseigenschaft noch erhöht werden. Beispielsweise ist eine weitestgehend konstante Dämpfung über die Länge der Bolzenführung möglich. Unter einer Anordnung der Dämpfungselemente auf einander gegenüberliegenden Seiten der Buchse ist zu verstehen, dass das erste Dämpfungselement benachbart zu der ersten Stirnseite der Buchse positioniert ist und das zweite Dämpfungselemente benachbart zu der zweiten Stirnseite der Buchse positioniert ist. Eines der oder beide Dämpfungselemente können auch in direkter Anlage zu der Buchse angeordnet sein.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein.

Verschiedene Modifikationen und Alternativen sind möglich, ohne vom Umfang der Erfindung, wie er in den beigefügten Ansprüchen definiert ist, abzuweichen.

Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der folgenden Figuren. Im Einzelnen zeigen:
- Fig. 1:: eine schematische Detailansicht des Bremssattels gem. Fig. 1 in einer ersten Ausführungsform;
- Fig. 2:: eine schematische Detailansicht des Bremssattels gem. Fig. 1 in einer zweiten Ausführungsform;
- Fig. 3:: eine schematische Detailansicht des Bremssattels gem. Fig. 1 in einer dritten Ausführungsform; und
- Fig. 4:: eine perspektivische Darstellung eines Dämpfungselements in einer Ausführungsform;

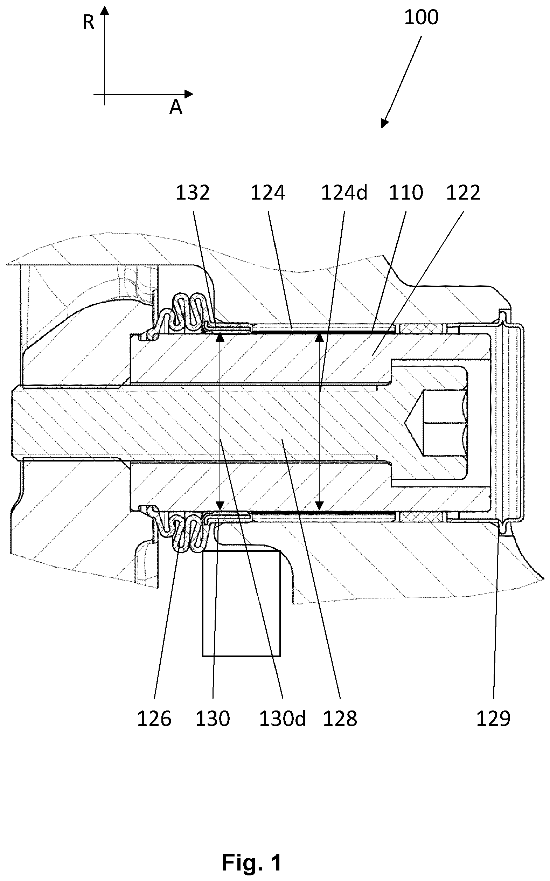

Die Figuren 1 bis 3 zeigen jeweils eine schematische Detailansicht eines Bremssattels 100. Der Bremssattel 100 weist eine Bolzenführung 110 auf, die als Ausnehmung oder Bohrung in dem Bremssattel 100 ausgebildet ist.

Die Bolzenführung 110 ist zum axialen Verschieben des Bremssattels 100 auf einem Bremsträger (nicht gezeigt) eingerichtet.

In der Bolzenführung 110 ist axial verschieblich ein Bolzen 122 aufgenommenen. Die Axialrichtung ist durch den Pfeil A gekennzeichnet.

Die Bolzenführung 110 ist durch einen Deckel 129 von außen abgedeckt.

Um den Bolzen 122 ist eine Buchse 124 angeordnet. Der Bolzen 122 ist zu der Buchse 124 koaxial angeordnet, sodass die Buchse 124 den Bolzen 122 umfänglich umgibt.

Der Bremssattel 100 weist ferner zusätzlich zu der Buchse 124 und an diese angrenzend ein Dämpfungselement 130 auf.

Das Dämpfungselement 130 ist um den Bolzen 122 herum angeordnet. Der Bolzen 122 ist zu dem Dämpfungselement 130 koaxial angeordnet, sodass das Dämpfungselement 130 den Bolzen 122 umfänglich umgibt.

Das Dämpfungselement 130 weist eine kürzere Länge auf als der Bolzen 122. Ferner weist der Bolzen 122 eine größere Länge auf als eine kumulierte Länge des Dämpfungselements 130 und der Buchse 124.

Das Dämpfungselement 130 ist dazu eingerichtet ist, eine Relativbewegung in radialer Richtung, gekennzeichnet durch den Pfeil R, zwischen dem Bolzen 122 und der Bolzenführung 110 zu dämpfen.

Das Dämpfungselement 130 ist benachbart zu der Buchse 124 angeordnet. Erfindungsgemäß ist eine Stirnfläche des Dämpfungselements 130 benachbart zu einer Stirnfläche der Buchse 124 angeordnet. Die Stirnflächen können auch in direkter Anlage zueinander angeordnet sein.

Das Dämpfungselement 130 ist aus einem Elastomer ausgebildet. Die Buchse 124 ist aus einem Metall ausgebildet.

Ferner ist der Innendurchmesser 130d des Dämpfungselements 130 kleiner als der Innendurchmesser 124d der Buchse 124.

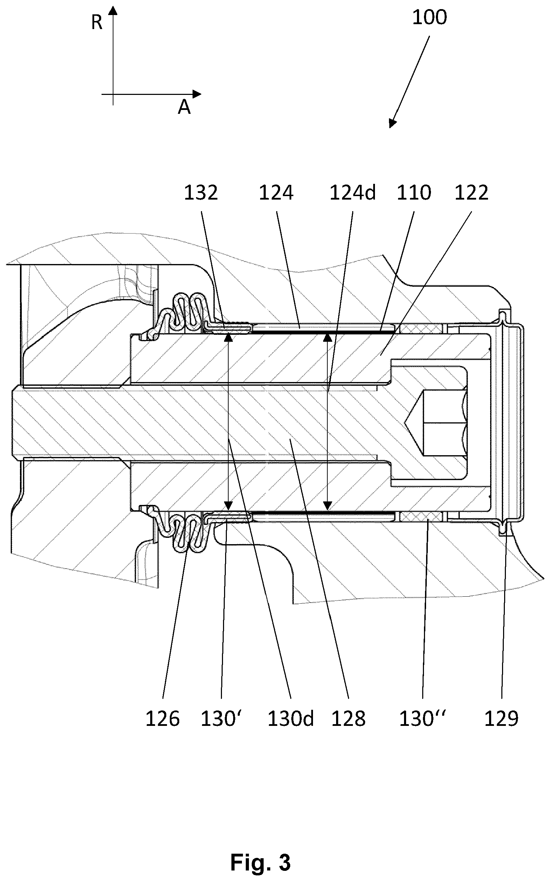

Wie insbesondere die Figuren 1 und 3 zeigen, weist das Dämpfungselement 130 in einer Ausführungsform ein Verstärkungselement 132 auf. In einer anderen Ausführungsform weist das Dämpfungselement 130 kein Verstärkungselement 132 auf. Das Verstärkungselement 132 ist ein Metallring oder ein Metallstab, welcher in dem Dämpfungselement 130 eingebettet ist.

Gemäß einem ersten Ausführungsbeispiel, siehe hierzu Figur 1, weist der Bremssattel 100 ferner ein Dichtungselement 126 auf. Das Dichtungselement 126 ist, an einem äußeren Ende des Bolzens 122 angeordnet, vorzugsweise an einem Ende gegenüberliegend zu dem Ende, an welchem der Kopf einer Zylinderschraube 128 angeordnet ist. Die Zylinderschraube 128 ist in dem Bolzen 122 angeordnet. Das Dämpfungselement 130 ist ein Teil des Dichtungselements 126. In weiteren nicht gezeigten Ausführungsformen weist der Bremssattel 100 mehrere, vorzugsweise zwei, Dichtungselemente auf. Vorzugsweise ist das Dämpfungselement 130 ein Teil des zweiten Dichtungselements.

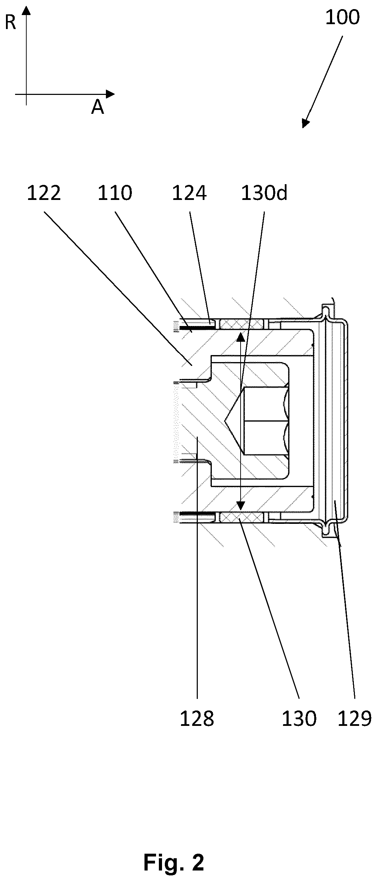

Gemäß einem zweiten Ausführungsbeispiel, das alternativ zu dem ersten Ausführungsbeispiel umgesetzt werden kann, siehe hierzu Figur 2, weist der Bremssattel 100 ein Dämpfungselement 130 auf. Hierbei ist das Dämpfungselement 130 benachbart zu der Buchse 124 und benachbart zu dem Deckel 129 angeordnet. Das Dämpfungselement 130 ist als einzelnes Bauteil ausgebildet.

Gemäß einem dritten Ausführungsbeispiel, siehe hierzu Figur 3, weist der Bremssattel 100 ein erstes Dämpfungselement 130' und zusätzlich ein zweites Dämpfungselement 130" auf. Die Ausführungsbeispiele der Figuren 1 und 2 sind kombiniert. Die Dämpfungselemente 130', 130" sind relativ zu der Buchse 124 auf einander gegenüberliegenden Seiten zu der Buchse 124 angeordnet. Das erste Dämpfungselement 130' ist angrenzend zu einer ersten Stirnseite der Buchse 124 angeordnet. Das dritte Ausführungsbeispiel weist ferner das Dichtungselement 126 gemäß dem ersten Ausführungsbeispiel auf. Vorzugsweise ist das erste Dämpfungselement 130' integral an dem Dichtungselement 126 ausgebildet. Das zweite Dämpfungselement 130' ist angrenzend zu der zweiten Stirnseite der Buchse 124 angeordnet. Das zweite Dämpfungselement 130' ist ferner angrenzend zu dem Deckel 129 angeordnet.

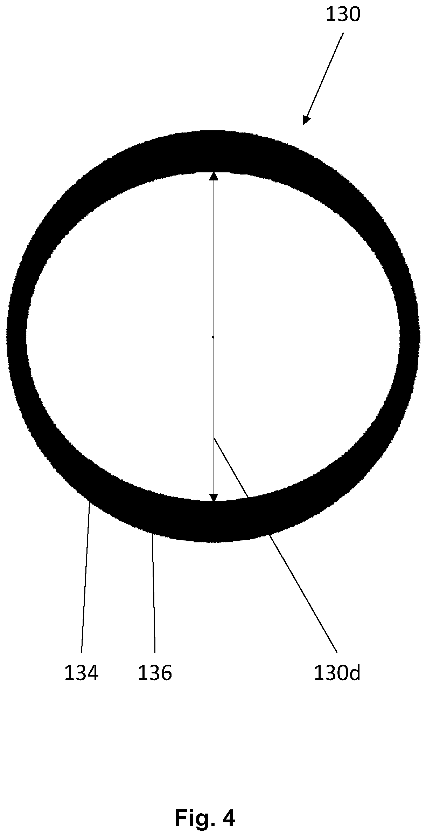

Fig. 4 zeigt ein Dämpfungselement 130, 130',130" zur Verwendung mit den Ausführungsbeispielen der Figuren 1 bis 2 im nicht montierten, nicht deformierten Zustand. Die Innenkontur 134 des Dämpfungselementes 130 ist im Querschnitt oval-förmig. In diesem Ausführungsbeispiel weist das Dämpfungselement 130 eine elliptische Innenkontur 134 auf. Ferner ist die Querschnittsfläche des Dämpfungselementes 130 ringförmig. Die Außenkontur 136 des Dämpfungselementes 130 ist kreisförmig. Somit variiert die Dicke entlang der Querschnittsfläche entlang des Umfangs. In anderen Ausführungsformen kann das Dämpfungselement 130 zumindest abschnittsweise eine hohlzylindrische Form aufweisen. Der Innendurchmesser des Dämpfungselementes 130d ist bei der oval-förmigen Innenkontur 134 in diesem Ausführungsbeispiel der kleinste Durchmesser der Querschnittsfläche.

### Bezugszeichenliste (Teil der Beschreibung)

- 100: Bremssattel
- 110: Bolzenführung
- 122: Bolzen
- 124: Buchse
- 124d: Innendurchmesser der Buchse
- 126: Dichtungselement
- 128: Zylinderschraube
- 129: Deckel
- 130: Dämpfungselement
- 130d: Innendurchmesser des Dämpfungselements
- 130': erstes Dämpfungselement
- 130": zweites Dämpfungselement
- 132: Verstärkungselement
- 134: Innenkontur
- 136: Außenkontur

- A: axiale Richtung
- R: radiale Richtung

## Patentansprüche

1. Bremssattel (100) für eine Fahrzeugbremse, insbesondere eine Nutzfahrzeug-Scheibenbremse, aufweisend
eine Bolzenführung (110) zum axialen Verschieben des Bremssattels (100) auf einem Bremsträger, und
einen axial verschieblich in der Bolzenführung (110) aufgenommenen Bolzen (122),
wobei der Bolzen (122) eine um den Bolzen (122) angeordnete Buchse (124) aufweist,
wobei
der Bremssattel (100) zusätzlich zu der Buchse (124) und an diese angrenzend zumindest ein Dämpfungselement (130) aufweist,
wobei das Dämpfungselement (130) den Bolzen (122) umfänglich umgibt und dazu eingerichtet ist, eine Relativbewegung in radialer Richtung zwischen dem Bolzen (122) und der Bolzenführung (110) zu dämpfen und wobei das Dämpfungselement (130) benachbart zu der Buchse (124) angeordnet ist, insbesondere ist das Dämpfungselement (130) zumindest abschnittweise in Anlage zu der Buchse (124) angeordnet, **dadurch gekennzeichnet, dass**
eine Stirnfläche des Dämpfungselements (130) benachbart zu einer Stirnfläche der Buchse (124) angeordnet ist.

2. Bremssattel (100) nach Anspruch 1
**dadurch gekennzeichnet, dass** der Bremssattel (100) ein Dichtungselement (126) aufweist, wobei das Dämpfungselement (130) ein Teil des Dichtungselements (126) ist.

3. Bremssattel (100) nach einem der vorstehenden Ansprüche,
**dadurch gekennzeichnet, dass** eine Innenkontur (134) des Dämpfungselementes (130), insbesondere im nicht montierten Zustand, im Querschnitt oval-förmig, insbesondere kreisförmig oder elliptisch, ist, wobei insbesondere das Dämpfungselement (130) zumindest abschnittsweise eine hohlzylindrische Form aufweist.

4. Bremssattel (100) nach einem der vorstehenden Ansprüche,
**dadurch gekennzeichnet, dass** der Innendurchmesser (130d) des Dämpfungselements (130) kleiner ist als der Innendurchmesser (124d) der Buchse (124).

5. Bremssattel (100) nach einem der vorstehenden Ansprüche,
**dadurch gekennzeichnet, dass** das Dämpfungselement (130) teilweise oder vollständig aus einem Elastomer ausgebildet ist, wobei insbesondere die Buchse (124) teilweise oder vollständig aus einem Metall ausgebildet ist.

6. Bremssattel (100) nach einem der vorstehenden Ansprüche,
**dadurch gekennzeichnet, dass** das Dämpfungselement (130) ein Verstärkungselement (132) aufweist, wobei insbesondere das Verstärkungselement (132) teilweise oder vollständig aus einem Metall ausgebildet ist.

7. Bremssattel (100) nach Anspruch 6,
**dadurch gekennzeichnet, dass** das Verstärkungselement (132) vollständig ummantelt in dem Dämpfungselement (130) angeordnet ist.

8. Bremssattel (100) nach einem der vorstehenden Ansprüche,
**dadurch gekennzeichnet, dass** das Dämpfungselement ein erstes Dämpfungselement (130') ist und der Bremssattel (100) zusätzlich ein zweites Dämpfungselement (130") aufweist, wobei die Dämpfungselemente (130, 130', 130") relativ zu der Buchse (124) auf einander gegenüberliegenden Seiten zu der Buchse (124) angeordnet sind, vorzugsweise an die Buchse (124) angrenzend.

## Claims

1. Brake caliper (100) for a vehicle brake, in particular a commercial vehicle disc brake, comprising
a bolt guide (110) for axially displacing the brake caliper (100) on a brake carrier, and
a bolt (122) which is received so as to be axially displaceable in the bolt guide (110),
the bolt (122) comprising a bushing (124) arranged around the bolt (122),
the brake caliper (100) comprising in addition to the bushing (124) at least one damping element (130) which borders on said bushing,
the damping element (130) circumferentially surrounding the bolt (122) and being designed to damp a relative movement in the radial direction between the bolt (122) and the bolt guide (110), and the damping element (130) being arranged adjacent to the bushing (124), in particular the damping element (130) is arranged in contact with the bushing (124) at least in portions,
**characterized in that** an end face of the damping element (130) is arranged adjacent to an end face of the bushing (124).

2. Brake caliper (100) according to claim 1,
**characterized in that** the brake caliper (100) comprises a sealing element (126), the damping element (130) being a part of the sealing element (126).

3. Brake caliper (100) according to either of the preceding claims,
**characterized in that** an inner contour (134) of the damping element (130), in particular in the unassembled state, has an oval-shaped, in particular circular or elliptical, cross section, in particular the damping element (130) having a hollow-cylindrical shape at least in portions.

4. Brake caliper (100) according to any of the preceding claims,
**characterized in that** the inner diameter (130d) of the damping element (130) is smaller than the inner diameter (124d) of the bushing (124).

5. Brake caliper (100) according to any of the preceding claims,
**characterized in that** the damping element (130) is formed partially or completely from an elastomer, in particular the bushing (124) being formed partially or completely from a metal.

6. Brake caliper (100) according to any of the preceding claims,
**characterized in that** the damping element (130) comprises a reinforcing element (132), in particular the reinforcing element (132) being formed partially or completely from a metal.

7. Brake caliper (100) according to claim 6,
**characterized in that** the reinforcing element (132) is arranged so as to be completely encased in the damping element (130).

8. Brake caliper (100) according to any of the preceding claims,
**characterized in that** the damping element is a first damping element (130') and the brake caliper (100) additionally comprises a second damping element (130"), the damping elements (130, 130', 130") being arranged relative to the bushing (124) on opposite sides of the bushing (124), preferably bordering on the bushing (124).

## Revendications

1. Étrier de frein (100) pour un frein de véhicule, en particulier un frein à disque de véhicule utilitaire, présentant
un guidage pour boulon (110) permettant de faire coulisser axialement l'étrier de frein (100) sur un support de frein, et
un boulon (122) reçu de manière à pouvoir coulisser axialement dans le guidage pour boulon (110),
dans lequel le boulon (122) présente une douille (124) disposée autour du boulon (122), dans lequel l'étrier de frein (100) présente, outre la douille (124), au moins un élément d'amortissement (130) adjacent à celle-ci,
dans lequel l'élément d'amortissement (130) entoure de manière circonférentielle le boulon (122) et est conçu pour amortir un déplacement relatif dans la direction radiale entre le boulon (122) et le guidage pour boulon (110), et dans lequel l'élément d'amortissement (130) est disposé de manière adjacente à la douille (124), en particulier l'élément d'amortissement (130) est disposé au moins dans certaines sections en appui sur la douille (124), **caractérisé en ce qu'**une surface frontale de l'élément d'amortissement (130) est disposée de manière adjacente à une surface frontale de la douille (124).

2. Étrier de frein (100) selon la revendication 1,
**caractérisé en ce que** l'étrier de frein (100) présente un élément d'étanchéité (126), dans lequel l'élément d'amortissement (130) fait partie de l'élément d'étanchéité (126).

3. Étrier de frein (100) selon l'une des revendications précédentes,
**caractérisé en ce qu'**un contour intérieur (134) de l'élément d'amortissement (130), en particulier à l'état non monté, présente une section transversale de forme ovale, en particulier circulaire ou elliptique, dans lequel l'élément d'amortissement (130) en particulier présente au moins dans certaines sections une forme de cylindre creux.

4. Étrier de frein (100) selon l'une des revendications précédentes,
**caractérisé en ce que** le diamètre intérieur (130d) de l'élément d'amortissement (130) est plus petit que le diamètre intérieur (124d) de la douille (124).

5. Étrier de frein (100) selon l'une des revendications précédentes,
**caractérisé en ce que** l'élément d'amortissement (130) est partiellement ou entièrement réalisé en un élastomère, dans lequel la douille (124) est en particulier partiellement ou entièrement réalisée en un métal.

6. Étrier de frein (100) selon l'une des revendications précédentes,
**caractérisé en ce que** l'élément d'amortissement (130) présente un élément de renforcement (132), dans lequel l'élément de renforcement (132) est en particulier partiellement ou entièrement réalisé en un métal.

7. Étrier de frein (100) selon la revendication 6,
**caractérisé en ce que** l'élément de renforcement (132) est disposé de manière entièrement enveloppée dans l'élément d'amortissement (130).

8. Étrier de frein (100) selon l'une des revendications précédentes,
**caractérisé en ce que** l'élément d'amortissement est un premier élément d'amortissement (130') et l'étrier de frein (100) présente en outre un second élément d'amortissement (130"), dans lequel les éléments d'amortissement (130, 130', 130") sont disposés, par rapport à la douille (124), sur des côtés mutuellement opposés à la douille (124), de préférence de manière adjacente à la douille (124).
